# EUROPEAN PATENT APPLICATION

(11) **EP 4 769 570 A1**
(43) Date of publication of application: **01.07.2026**
(21) Application number: 23950955.7
(22) Date of filing: 20.12.2023
(51) Int. Cl.: H01M 4/62, H01M 4/1395, H01M 4/38, H01M 4/485, H01M 4/583, H01M 4/134

(54) **PRIMER SOLUTION FOR MANUFACTURING ELECTRODE, METHOD FOR MANUFACTURING ELECTRODE FOR SECONDARY BATTERY, AND ELECTRODE FOR SECONDARY BATTERY**

(30) Priority: 28.08.2023 KR 20230112824
(71) Applicant: SK On Co., Ltd., Seoul 03161 (KR)
(72) Inventor: JO, Yeong Min, Yuseong-gu Daejeon 34124 (KR); PARK, Sung Jun, Yuseong-gu Daejeon 34124 (KR); LEE, Dong Hoon, Yuseong-gu Daejeon 34124 (KR); BAE, Mi Ju, Yuseong-gu Daejeon 34124 (KR); JEON, Chi Won, Yuseong-gu Daejeon 34124 (KR); HWANG, Hye Won, Yuseong-gu Daejeon 34124 (KR)
(74) Representative: Prüfer & Partner mbB Patentanwälte · Rechtsanwälte
(86) International application number: PCT/KR2023/021139
(87) International publication number: WO 2025/048080

(57) **Abstract**

This disclosure relates to a primer solution for manufacturing an electrode, the primer solution for manufacturing an electrode comprising a binder and an antifoaming agent, wherein a content of the antifoaming agent is 0.00001 wt% to 3.2 wt% based on a total weight of the primer solution for manufacturing an electrode.

## Description

### [Field]

Embodiments of the present disclosure relate to a primer solution for manufacturing an electrode, a method for fabricating an electrode for a secondary battery, and an electrode for a secondary battery.

### [Background technology]

With the development of the electronics, communication, and space industries, a demand for lithium secondary batteries as an energy power source is increasing rapidly. In particular, the electric vehicle market is significantly growing as the importance of global ecofriendly policies is emphasized, and research and development on lithium secondary batteries are being actively conducted at home and abroad.

A lithium secondary battery includes a cathode, an anode, and a separator disposed therebetween, and the cathode and the anode are provided with active materials into which lithium ions may be inserted and extracted, respectively.

In manufacturing the electrode of the lithium secondary battery, a primer may be coated on the surface of the collector to increase the adhesion between the collector and the electrode active material.

### [Detailed Description of the Invention]

### [Technical Problem]

Embodiments of the present disclosure may provide a primer solution for electrode manufacturing, a method of manufacturing an electrode for a secondary battery, and an electrode for a secondary battery that may improve processability while maintaining excellent coating quality.

A secondary battery including an electrode for a secondary battery according to one embodiment of the present disclosure may be widely applied in electric vehicles, battery charging stations, and other green technology fields such as solar power generation and wind power generation utilizing batteries.

### [Technical solutions]

A primer solution for manufacturing an electrode according to an embodiment of the present disclosure includes a binder and an antifoaming agent, in which a content of the antifoaming agent is 0.00001 wt% to 3.2 wt% based on a total weight of the primer solution for manufacturing an electrode.

In an embodiment, the content of the antifoaming agent may be 0.0005 wt% to 3.0 wt% based on the total weight of the primer solution for manufacturing an electrode.

In an embodiment, the binder may include at least one selected from the group consisting of an aqueous binder or a non-aqueous binder.

In an embodiment, the binder may include at least one selected from the group consisting of Styrene-butadiene rubber (SBR)-based binders, carboxymethyl cellulose (CMC), polyacrylic acid-based binders, poly(3,4-ethylenedioxythiophene) (PEDOT)-based binders, polyvinylidenefluoride (PVDF), Poly(vinylidene fluoride-co-hexafluoropropylene), polyacrylonitrile, polymethylmethacrylate, acrylonitrile butadiene rubber (NBR), or polybutadiene rubber (BR).

In an embodiment, the antifoaming agent may include at least one selected from the group consisting of a silicone-based antifoaming agent, a metal soap-based antifoaming agent, an amide-based antifoaming agent, a polyether-based antifoaming agent, a polyester-based antifoaming agent, a polyglycol-based antifoaming agent, or an alcohol-based antifoaming agent.

In an embodiment, the primer solution may further include a thickener.

In an embodiment of the present disclosure, a method for manufacturing an electrode for a secondary battery includes applying, to at least one surface of an electrode collector, a first composition including a binder and an antifoaming agent and a second composition including an electrode active material, in which the first composition includes 0.00001 wt% to 3.2 wt% of the antifoaming agent based on a total weight of the first composition.

In an embodiment, the binder may include at least one selected from the group consisting of Styrene-butadiene rubber (SBR)-based binders, carboxymethyl cellulose (CMC), polyacrylic acid-based binders, poly(3,4-ethylenedioxythiophene) (PEDOT)-based binders, polyvinylidenefluoride (PVDF), Poly(vinylidene fluoride-co-hexafluoropropylene), polyacrylonitrile, polymethylmethacrylate, acrylonitrile butadiene rubber (NBR), or polybutadiene rubber (BR).

In an embodiment, the antifoaming agent may include at least one selected from the group consisting of a silicone-based antifoaming agent, a metal soap-based antifoaming agent, an amide-based antifoaming agent, a polyether-based antifoaming agent, a polyester-based antifoaming agent, a polyglycol-based antifoaming agent, or an alcohol-based antifoaming agent.

In an embodiment, the second composition may be applied to the first composition applied to the electrode collector.

In an embodiment, the electrode active material may include a lithium metal compound.

In an embodiment, the electrode active material may include at least one selected from the group consisting of a silicon-based material or a carbon-based material.

In an embodiment, the second composition may further include a binder.

In an embodiment, the method may further include drying the first composition and the second composition applied to at least one surface of the electrode collector.

In an embodiment of the present disclosure, an electrode for a secondary battery includes: an electrode collector; and an electrode composite layer disposed on at least one surface of the electrode collector, in which the electrode composite layer includes 0.00001 wt% to 10 wt% of an antifoaming agent based on a total weight of the electrode composite layer in a first region that is defined as a region within 10 µm thickness from one surface of the electrode collector.

In an embodiment, the first region may further include a binder.

In an embodiment, the electrode composite layer may be defined as a region on the first region and may include a second region including an electrode active material.

In an embodiment, the first region may include 0.00001 wt% to 5 wt% of the antifoaming agent based on the total weight of the electrode composite layer.

In an embodiment, the first region may include the binder and the antifoaming agent, in which the first region may be prepared from a primer solution including 0.00001 wt% to 3.2 wt% of the antifoaming agent based on a total weight of the primer solution.

### [Effect]

According to the present disclosure, the primer solution for manufacturing an electrode, a method for manufacturing an electrode for a secondary battery, and an electrode for a secondary battery that may improve processability while maintaining excellent coating quality may be provided.

### [Description of the drawing]

FIG. 1 is a flowchart showing a method for manufacturing an electrode for a secondary battery according to an embodiment of the present disclosure.
FIG. 2 is a view for explaining an electrode for a secondary battery according to an embodiment of the present disclosure.
FIG. 3 is an image for comparing bubble generation characteristics of primer solutions according to one embodiment and one comparative example of the present disclosure.
FIG. 4 is an image for comparing coating quality of primer solutions according to one embodiment and one comparative example of the present disclosure.
FIG. 5 is an image for comparing bubble generation characteristics of the primer solutions based on contents of the antifoaming agent according to embodiments of the present disclosure.
FIG. 6 is an image for comparing phase separation phenomena based on contents of the antifoaming agent for primer solutions according to embodiments of the present disclosure.
FIG. 7 is a graph showing a variation of adhesion based on contents of the antifoaming agent for primer solutions according to embodiments of the present disclosure.

### [Embodiments]

The structural or functional descriptions of the embodiments disclosed in this specification or application are illustrative only for the purpose of describing embodiments in accordance with the technical ideas of the invention, and embodiments in accordance with the technical ideas of the invention may be practiced in various forms other than those disclosed in this specification or application, and should not be construed as limiting the technical ideas of the invention to the embodiments described in this specification or application.

### Primer Solution

In one aspect of the present disclosure, there is provided a primer solution for manufacturing an electrode including a binder and an antifoaming agent, wherein a content of the antifoaming agent is from 0.00001 wt% to 3.2 wt%, based on a total weight of the primer solution for manufacturing an electrode.

The primer solution according to one embodiment of the present disclosure may be a primer solution used for manufacturing an electrode. The primer solution may be coated on an electrode collector to improve adhesion between the electrode collector and an electrode active material layer containing an electrode active material. In one embodiment, the electrode may be an anode or a cathode.

The primer solution includes a binder. The binder may be a substance capable of improving adhesion between the electrode active material and the electrode collector or adhesion between the electrode active materials.

In one embodiment, the binder may include at least one selected from the group consisting of an aqueous binder and a non-aqueous binder. For example, when the solvent of the primer solution is an aqueous solvent, the binder may be an aqueous binder. When the solvent of the primer solution is a non-aqueous solvent, the binder may be a non-aqueous binder.

For example, the binder may include at least one selected from the group consisting of a styrene-butadiene rubber (SBR)-based binder, carboxymethyl cellulose (CMC), a polyacrylic acid-based binder, a poly(3,4-ethylenedioxythiophene) (PEDOT)-based binder, polyvinylidene fluoride (PVDF), a poly(vinylidene fluoride-co-hexafluoropropylene) copolymer, polyacrylonitrile, polymethyl methacrylate, acrylonitrile butadiene rubber (NBR), and polybutadiene rubber (BR). However, the embodiment of the present disclosure is not limited thereto.

The primer solution includes an antifoaming agent. The antifoaming agent may be a substance that suppresses the formation of bubbles or bubbles in the primer solution. The antifoaming agent may include at least one selected from the group consisting of, for example, silicone-based antifoaming agents, metal soap-based antifoaming agents, amide-based antifoaming agents, polyether-based antifoaming agents, polyester-based antifoaming agents, polyglycol-based antifoaming agents, and alcohol-based antifoaming agents. In one embodiment, the antifoaming agent may be a material that is substantially insoluble in the solvent of the primer solution. In one embodiment, at least a portion of the antifoaming agent included in the primer solution may remain as a solid after coating and drying of the primer solution. In one embodiment, the drying of the primer solution may be performed at a temperature of 100°C to 300°C, more particularly 100°C to 250°C.

In one embodiment, the content of the antifoaming agent in the primer solution may be 5 wt% or less, more particularly from 0.00001 wt% to 3.2 wt%, and further more particularly from 0.0005 wt% to 3.0 wt%. By including the content of the antifoaming agent in the primer solution within the above-described range, an adhesion strength decrease phenomenon of the primer layer due to phase separation may be suppressed while the generation of bubbles caused by the antifoaming agent is sufficiently suppressed.

In one embodiment, the antifoaming agent may be provided in the form of a dispersion dispersed in a dispersant, and the antifoaming agent provided in the form of a dispersion may be mixed with the solvent of the binder and primer solution to obtain the primer solution. The above-described content of the antifoaming agent may refer to the content of the active ingredient excluding the dispersant in the antifoaming agent dispersion provided in the form of a dispersion.

In one embodiment, when the solvent in the primer solution is an aqueous solvent, the antifoaming agent may be provided in the form of a dispersion dispersed in an aqueous dispersant, and the antifoaming agent may be substantially insoluble in the aqueous solvent in the primer solution. In another embodiment, when the solvent in the primer solution is a non-aqueous solvent, the antifoaming agent may be provided in the form of a dispersion dispersed in a non-aqueous dispersant, wherein the antifoaming agent may have a water insolubility that is substantially insoluble in the non-aqueous solvent in the primer solution.

In one embodiment, the primer solution may selectively further include a thickener to achieve electrode manufacturing process benefits. The thickener may be a substance that enhances the cohesion of the binder, thereby improving a problem of a crack occurring on an electrode surface. For example, the thickener may include at least one selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

In one embodiment, the primer solution may include an aqueous solvent or a non-aqueous solvent. The solvent may include at least one selected from the group consisting of, for example, water, pure water, deionized water, distilled water, ethanol, isopropanol, methanol, acetone, n-propanol, t-butanol, N-methyl-2-pyrrolidone (NMP), dimethylformamide, dimethylacetamide, N,N-dimethylaminopropylamine, ethylene oxide, and tetrahydrofuran.

### Method for manufacturing electrode for secondary battery

In another aspect of the present disclosure, there is provided a method for manufacturing an electrode for a secondary battery, including: applying, on at least one surface of an electrode collector, a first composition including a binder and an antifoaming agent, and a second composition including an electrode active material; wherein the first composition includes from 0.00001 wt% to 3.2 wt%, based on a total weight of the first composition, of the antifoaming agent.

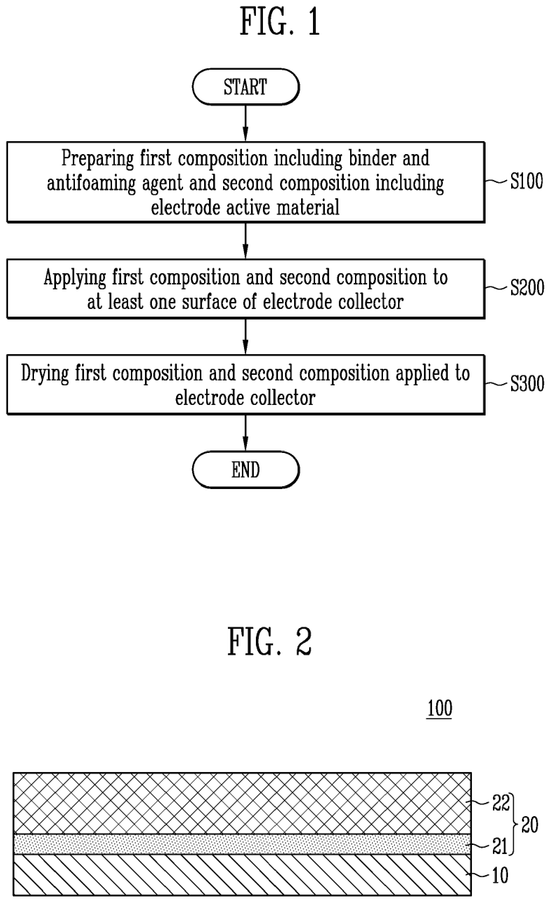

FIG. 1 is a flowchart for explaining the method for manufacturing an electrode for a secondary battery according to an embodiment of the present disclosure. Hereinafter, the method for manufacturing an electrode for a secondary battery according to an embodiment of the present disclosure will be described with reference to FIG. 1.

Referring to FIG. 1, a first composition and a second composition may be prepared in operation S100.

The first composition includes a binder and an antifoaming agent. In one embodiment, the first composition may be the above-described primer solution. The foregoing description of the primer solution is applicable to both the first composition and the second composition of the method for manufacturing an electrode for a secondary battery according to one embodiment of the present disclosure.

The second composition may include an electrode active material. The electrode active material may be an anode active material or a cathode active material.

In one embodiment, the anode active material may be a material capable of reversibly intercalating and de-intercalating lithium ions, for example, a lithium metal compound.

According to exemplary embodiments, the anode active material may include a lithium-nickel metal oxide. The lithium-nickel metal oxide may further include at least one of cobalt (Co), manganese (Mn), and aluminum (Al).

In some embodiments, the anode active material may include a layered structure or a crystalline structure represented by Chemical equation 1 below.

[Chemical equation 1] LiₓNiₐM_{b}O_{2+z}

In Chemical equation 1, 0.9≤x≤1.2, 0.6≤a≤0.99, 0.01≤b≤0.4, -0.5≤z≤0.1. As described above, M may include Co, Mn, and/or Al.

The chemical structure represented by Chemical equation 1 is indicative of the bonding relationships contained within the layered or crystalline structure of the anode active material and is not intended to exclude other additional elements. For example, M includes Co and/or Mn, wherein Co and/or Mn may be provided as the main active element of the anode active material together with Ni. Chemical equation 1 is provided to express the bonding relationships of the main active elements and should be understood as encompassing the introduction and substitution of additional elements.

In one embodiment, auxiliary elements may be further included in addition to the main active element to promote the chemical stability of the anode active material or the layered structure/crystal structure. It should be understood that the auxiliary elements may be incorporated together within the layered structure/crystal structure to form bonds, which are also within the range of chemical structures represented by Chemical equation 1.

The auxiliary elements may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary elements may also act as auxiliary active elements that contribute to the capacity/output activity of the anode active material in combination with Co or Mn, for example, Al.

For example, the anode active material or the lithium-nickel metal oxide may include a layered structure or a crystalline structure represented by Chemical equation 1-1 below.

[Chemical equation 1-1] LiₓNiₐM1_{b1}M2_{b2}O_{2+z}

In Chemical equation 1, M1 may include Co, Mn, and/or Al. M2 may include the above-described auxiliary elements. In Chemical equation 1-1, 0.9≤x≤1.2, 0.6≤a≤0.99, 0.01≤b1+b2≤0.4, -0.5≤z≤0.1.

The anode active material may further include a coating element or a doping element. For example, elements that are substantially the same or similar to the above-described auxiliary elements may be used as coating elements or doping elements. For example, the above-described elements may be used alone or in combination of two or more as a coating element or a doping element.

The coating element or doping element may be present on the surface of the lithium-nickel metal oxide particles, or may penetrate through the surface of the lithium-nickel metal composite oxide particles and be contained within a bonding structure represented by Chemical equation 1 or Chemical equation 1-1.

The anode active material may include a nickel-cobalt-manganese (NCM)-based lithium oxide. In this case, the NCM-based lithium oxide with an increased content of nickel may be used.

Ni may be provided as a transition metal that is associated with the power and capacity of the lithium secondary battery. Thus, by employing a high-Ni composition in the anode active material as described above, a high-capacity anode and a high-capacity lithium secondary battery may be provided.

However, as the content of Ni increases, the long-term retention stability and life stability of the anode or secondary battery may relatively decrease, and side reactions with the electrolyte may increase. However, according to exemplary embodiments, the secondary battery may maintain electrical conductivity by including Co, and improve life stability and capacity retention characteristics through Mn.

The content of Ni in the NCM-based lithium oxide (e.g., the mole fraction of nickel in the total moles of nickel, cobalt, and manganese) may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the anode active material may include a lithium cobalt oxide active material, a lithium manganese oxide active material, a lithium nickel oxide active material, or a lithium iron phosphate (LFP) active material (e.g., LiFePO₄).

In some embodiments, the anode active material may include, for example, a Mn-rich active material, a Li rich layered oxide (LLO)/an Over Lithiated Oxide (OLO) active material, a Co-less active material, or a Co-less active material having a chemical structure or crystal structure represented by Chemical equation 2.

[Chemical equation 2]. p[Li₂MnO₃]·(1-p)[Li_{q}JO₂]

In Chemical equation 2, 0<p<1, 0.9≤q≤1.2, and J may include at least one element among Mn, Ni, Co, Fe, Cr, V, Cu, Zn, Ti, Al, Mg, and B.

In one embodiment, the cathode active material may be a material capable of adsorbing and desorbing lithium ions and may include, for example, at least one selected from the group consisting of a silicon-based material and a carbon-based material. Alternatively, as another example, the cathode active material may include a lithium metal, a lithium alloy, or a tin-based material.

The carbon-based material may include, for example, at least one selected from the group consisting of artificial graphite, natural graphite, hard carbon, soft carbon, carbon black, acetylene black, ketzen black, super P, and graphene.

The silicon-containing material may provide increased capacity characteristics. The silicon-containing material may include Si, SiOₓ (0<x<2), metal-doped SiOₓ (0<x<2), and silicon-carbon composites. The metal may include lithium and/or magnesium, and the metal-doped SiOₓ (0<x<2) may include a metal silicate.

The lithium metal may be pure lithium metal or lithium metal with a protective layer for suppressing dendrite growth. In one embodiment, a lithium metal-containing layer deposited or coated on the cathode collector may be used as the cathode active material layer. In one embodiment, a lithium thin film layer may be used as the cathode active material layer.

Elements included in the lithium alloy may include aluminum, zinc, bismuth, cadmium, antimony, silicon, lead, tin, gallium, or indium.

The second composition may include, as a solvent, at least one selected from the group consisting of water, pure water, deionized water, distilled water, ethanol, isopropanol, methanol, acetone, n-propanol, t-butanol, N-methyl-2-pyrrolidone (NMP), dimethylformamide, dimethylacetamide, N,N-dimethylaminopropylamine, ethylene oxide, and tetrahydrofuran .

In one embodiment, the second composition may further include a binder. In one embodiment, the binder may include at least one selected from the group consisting of an aqueous binder and a non-aqueous binder.

For example, when the solvent of the second composition is an aqueous solvent, the binder may be an aqueous binder. When the solvent of the second composition is a non-aqueous solvent, the binder may be a non-aqueous binder. For example, the binder may include at least one selected from the group consisting of a styrene-butadiene rubber (SBR)-based binder, carboxymethyl cellulose (CMC), a polyacrylic acid-based binder, a poly(3,4-ethylenedioxythiophene) (PEDOT)-based binder, polyvinylidene fluoride (PVDF), a poly(vinylidene fluoride-co-hexafluoropropylene) copolymer, polyacrylonitrile, polymethyl methacrylate, acrylonitrile butadiene rubber (NBR), and polybutadiene rubber (BR). However, the embodiment of the present disclosure is not limited thereto.

In one embodiment, the second composition may selectively further include a thickener to secure benefits in the electrode manufacturing process. The thickener may be a substance that enhances the cohesion of the binder, thereby improving a problem of a crack occurring on an electrode surface. For example, the thickener may include at least one selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

In operation S200, the first composition and the second composition may be applied to at least one surface of the electrode collector.

In one embodiment, the electrode collector is not particularly limited as long as the electrode collector is conductive without causing chemical changes in the secondary battery, and may be made of, for example, copper, stainless steel, aluminum, nickel, titanium, calcined carbon, a surface of copper or stainless steel treated with carbon, nickel, titanium, silver, etc., and an aluminum-cadmium alloy. In addition, microscopic irregularities may be formed on the surface to enhance the binding of the cathode active material, and may be used in various forms, such as films, sheets, foils, nets, porous materials, foams, and nonwoven materials. In one embodiment, the electrode collector may have a thickness of 6 µm to 100 µm. However, the embodiment of the present disclosure is not limited thereto.

In one embodiment, the first composition may be applied onto the electrode collector to form a first layer including a binder and an antifoaming agent, and the second composition may be applied onto the first composition to form a second layer including an electrode active material. The application of the first and second compositions may be performed sequentially or simultaneously. In one embodiment, the first composition and the second composition may be applied simultaneously onto the electrode collector using dual coating equipment.

Since the first composition includes an appropriate amount of antifoaming agent as described above, bubble generation may be suppressed during the preparation of the first composition in operation S100 and/or the application of the first composition in operation S200, thereby improving processability in electrode manufacturing.

In operation S300, the first composition and the second composition applied onto the electrode collector may be dried.

In one embodiment, by drying the first composition and the second composition, the solvent contained in the first composition and the second composition may be volatilized, thereby allowing a first layer to be formed from the first composition and a second layer to be formed from the second composition. In one embodiment, the drying may be performed at a temperature of 100°C to 300°C, more specifically at a temperature of 100°C to 250°C. However, the embodiment of the present disclosure is not limited thereto.

After drying, at least a portion of the antifoaming agent may remain in the first layer without volatilizing. As described above, by including 3.2 wt% or less of antifoaming agent in the first composition, the first layer may maintain excellent adhesion strength even after drying.

Due to the presence of the first layer with excellent adhesion strength, delamination of the second layer containing the electrode collector and the electrode active material may be prevented.

In one embodiment, after drying, the boundary between the first and second layers may be clearly distinguished, but in another embodiment, the boundary between the first and second layers may not be clearly distinguished as a gradient is formed due to migration of the binder or the like.

### Cathode for secondary battery

In another aspect of the present disclosure, there is provided an electrode for a secondary battery, including: an electrode collector; and an electrode composite layer formed on at least one surface of the electrode collector, the electrode composite layer including, in a first region defined as a region within 10 µm thickness of the one surface of the electrode collector, 0.00001 wt% to 10 wt% of an antifoaming agent, based on the total weight of the electrode composite layer in the first region.

FIG. 2 is a view for explaining an electrode for a secondary battery according to an embodiment of the present disclosure. Hereinafter, the electrode for a secondary battery according to an embodiment of the present disclosure will be described with reference to FIG. 2.

Referring to FIG. 2, an electrode 100 for a secondary battery includes an electrode collector 10 and an electrode composite layer 20.

All of the above-described features of the electrode collector may be applied to the electrode collector 10.

The electrode composite layer 20 may include a first region 21 and a second region 22. The first region 21 may be formed on at least one surface of the electrode collector 10, and may be defined as a region within a thickness of 10 µm from the one surface of the electrode collector 10. The second region 22 may be formed on the first region 21.

The first region 21 may include a binder and an antifoaming agent. The first region 21 may include 0.00001 wt% to 10 wt% of the antifoaming agent based on the total weight of the electrode composite layer of the first region 21, more specifically, 0.00001 wt% to 5 wt%, 0.00001 wt% to 3.2 wt%, or 0.0005 wt% to 3.0 wt%.

In one embodiment, the first region 21 may be prepared from the first composition described above or from the primer solution described above. That is, the first region 21 may be prepared from a primer solution including a binder and an antifoaming agent, and including 0.00001 wt% to 3.2 wt% of the antifoaming agent. The first region 21 may be a region formed as the above-described primer solution is applied to the electrode collector 10 and then dried.

In one embodiment, as the first region 21 is prepared from the primer solution including 0.00001 wt% to 3.2 wt% of antifoaming agent, excellent adhesion may be maintained, and as a result, the electrode 100 for a secondary battery may maintain excellent performance as delamination of the electrode active material is suppressed.

The second region 22 may include an electrode active material. The second region may be a region formed as the above-described second composition is applied and then dried.

The first region 21 may correspond to the dried first layer of FIG. 1, and the second region 22 may correspond to the dried second layer of FIG. 1. Accordingly, in one embodiment, the boundary between the first region 21 and the second region 22 may be clearly distinguished, but in another embodiment, the boundary between the first region 21 and the second region 22 may not be clearly distinguished as a gradient is formed due to migration of the binder or the like.

### Secondary battery

According to another aspect of the present disclosure, a secondary battery including the above-described electrode for a secondary battery may be provided.

The secondary battery may include an anode for a secondary battery and a cathode for a secondary battery, wherein at least one of the anode and the cathode may be prepared using the primer solution described above.

The secondary battery may include a separator in addition to the electrode according to the present disclosure. The separator may be configured to prevent an electrical short between the anode and cathode and to allow the flow of ions to occur. According to an embodiment, the separator may have a thickness of 10 µm to 20 µm. However, the embodiment of the present disclosure is not limited thereto.

For example, the separator may include a porous polymeric film or a porous nonwoven fabric. The porous polymeric film may include a polyolefin-based polymer, such as an Ethylene polymer, a Propylene polymer, an Ethylene/Butene copolymer, an Ethylene/Hexene copolymer, and an Ethylene/Methacrylate copolymer. The porous nonwoven fabric may include high melting point glass fibers and polyethylene terephthalate fibers. The separator may also include a ceramic-based material. For example, inorganic particles may be coated on the polymeric film or dispersed in the polymeric film to improve heat resistance.

The separator may have a single-layer or double-layer structure including the polymeric film and/or nonwoven fabric described above.

The cathode, the anode, and the separator may be manufactured into an electrode assembly through winding, lamination, folding, or zigzag stacking processes. Also, the electrode assembly may be provided with an electrolyte and be manufactured into a secondary battery according to the present disclosure. The secondary battery may have one of cylindrical, prismatic, pouch, and coin shapes using a can. However, the embodiment of the present disclosure is not limited thereto.

The electrode assembly may be accommodated in a case together with the electrolyte to define a lithium secondary battery. According to exemplary embodiments, a non-aqueous electrolyte may be used as the electrolyte.

The electrolyte may be a non-aqueous electrolyte. The electrolyte may include a lithium salt and an organic solvent. The organic solvent may include at least one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

### Examples

Hereinafter, examples of the present disclosure will be further described with reference to specific experimental examples. The examples and comparative examples included in the experimental examples are illustrative of the invention and do not limit the scope of the appended patent claims, and it will be apparent to those skilled in the art that various changes and modifications to the examples are possible within the scope of the invention and the technical idea, and that such changes and modifications fall within the scope of the appended patent claims.

### <Example 1> - Preparation of primer solution 1

The primer solution is prepared by adding, to distilled water, an antifoaming agent dispersion containing 20 wt% of styrene-butadiene rubber (SBR), carboxymethylcellulose (CMC) and an antifoaming agent as active ingredients.

The primer solution is prepared by varying the content of the antifoaming agent, and specific compositions of the prepared primer solution is shown in Table 1 below. In Table 1 below, the content of the antifoaming agent represents the content of the active ingredient excluding the dispersant in the antifoaming agent dispersion provided in the form of a dispersion.

**[Table 1]**

| | SBR (wt%) | CMC (wt%) | Antifoaming agent (wt%) | Distilled water (wt%) |
|---|---|---|---|---|
| Example 1-1 | 23.99 | 0.30 | 0.01 | 75.70 |
| Example 1-2 | 23.95 | 0.30 | 0.05 | 75.70 |
| Example 1-3 | 23.00 | 0.30 | 1.00 | 75.70 |
| Example 1-4 | 21.00 | 0.30 | 3.00 | 75.70 |
| Example 1-5 | 20.50 | 0.30 | 3.50 | 75.70 |

**<Example 2>** - **Preparation of primer solution 2** A primer solution is prepared by adding, to distilled water, an antifoaming agent dispersion containing 30 wt% of styrene-butadiene rubber (SBR), carboxymethylcellulose (CMC), and an antifoaming agent as active ingredients.

The primer solution is prepared by varying the content of the antifoaming agent, and the specific compositions of the prepared primer solution are shown in Table 2 below. In Table 2 below, the content of the antifoaming agent represents the content of the active ingredient excluding the dispersant in the antifoaming agent dispersion provided in the form of a dispersion.

**[Table 2]**

| | SBR (wt%) | CMC (wt%) | Antifoaming agent (wt%) | Distilled water (wt%) |
|---|---|---|---|---|
| Example 2-1 | 23.99 | 0.30 | 0.01 | 75.70 |
| Example 2-2 | 23.95 | 0.30 | 0.05 | 75.70 |
| Example 2-3 | 23.00 | 0.30 | 1.00 | 75.70 |
| Example 2-4 | 21.00 | 0.30 | 3.00 | 75.70 |
| Example 2-5 | 20.50 | 0.30 | 3.50 | 75.70 |

**<Comparative Example 1> - Preparation of primer solution 3** A primer solution is prepared by adding, to distilled water, only styrene-butadiene rubber (SBR) and carboxymethylcellulose (CMC). The specific compositions of the prepared primer solution are shown in Table 3 below.

**[Table 3]**

| | SBR (wt%) | CMC (wt%) | Distilled water (wt%) |
|---|---|---|---|
| Comparative example 1 | 24.00 | 0.30 | 75.70 |

### <Experimental Example 1> - Characterization with and without antifoaming

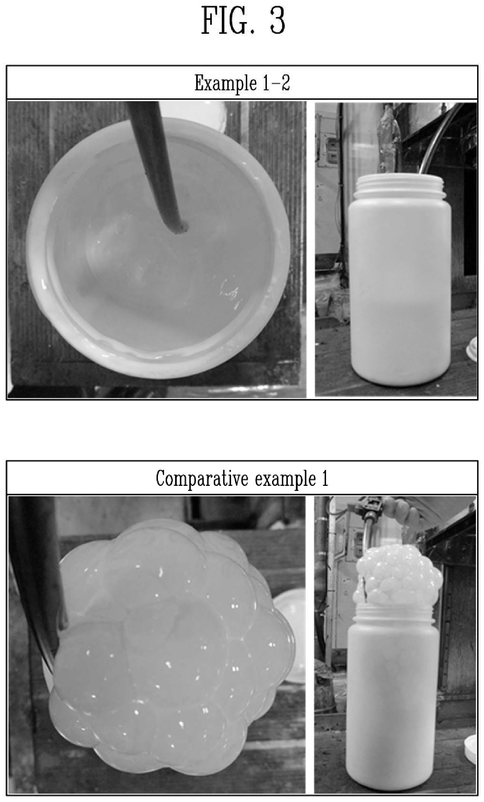

**agent** A comparison between the bubble generation characteristics of the primer solutions according to Example 1-2 and Comparative Example 1 is shown in FIG. 3.

As shown in FIG. 3, it may be seen that in the case of Example 1-2 with the antifoaming agent, the bubble generation of the primer solution is suppressed.

On the other hand, in the case of Comparative Example 1 without the antifoaming agent, the bubble generation of the primer solution is observed.

In other words, bubble generation may be suppressed by adding the antifoaming agent to the primer solution.

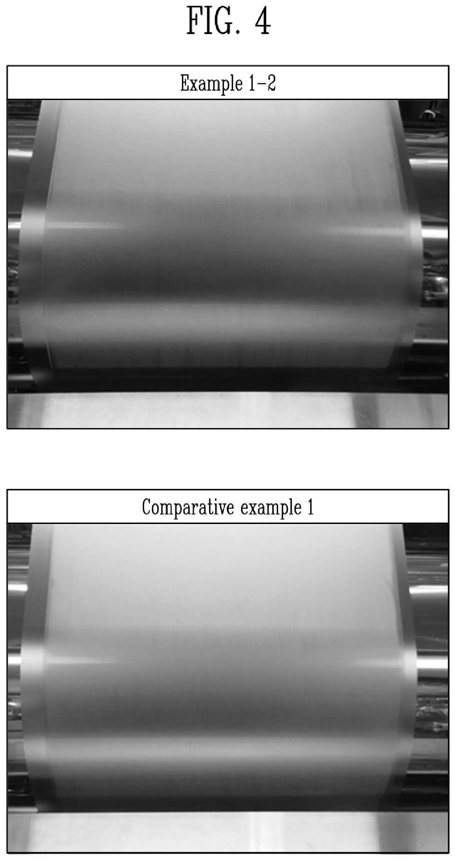

Furthermore, the primer solutions of Example 1-2 and Comparative example 1 are coated on the collector, and the results are shown in FIG. 4.

From FIG. 4, it may be seen that there is little difference in the coating quality between Example 1-2 and Comparative Example 1. In other words, adding the additional antifoaming agent to the primer solution may not reduce the coating quality of the primer solution due to a decrease in compatibility.

### <Experimental Example 2> - Confirmation of bubble generation characteristics according to input content of antifoaming agent

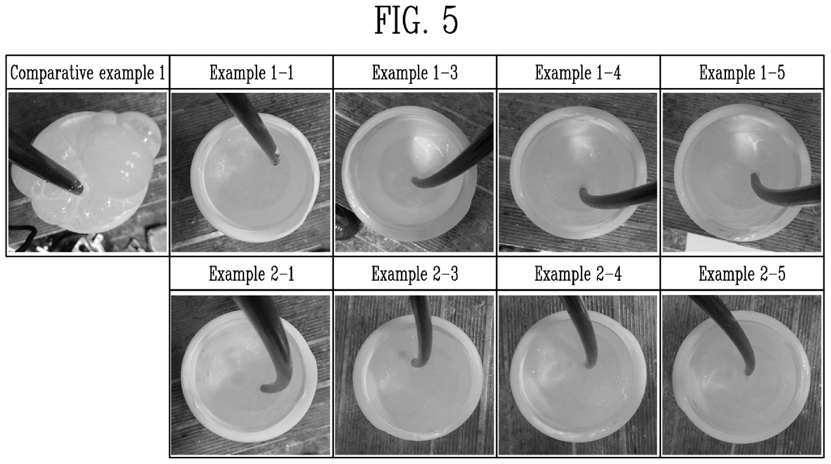

The bubble generation characteristics of the primer solutions according to Examples 1 and 2 are determined and are shown in FIG. 5.

As shown in FIG. 5, it is confirmed that adding only 0.01 wt% of the antifoaming agent to the primer solution, based on the total weight of the primer solution, is sufficient to suppress bubble generation.

Also, it is confirmed that, although an amount of the bubble generation decreases as the content of the antifoaming agent increases, a difference generated depending on the contents of the antifoaming agent is not significant.

### <Experimental Example 3> - Confirmation of adhesion strength according to input content of antifoaming agent

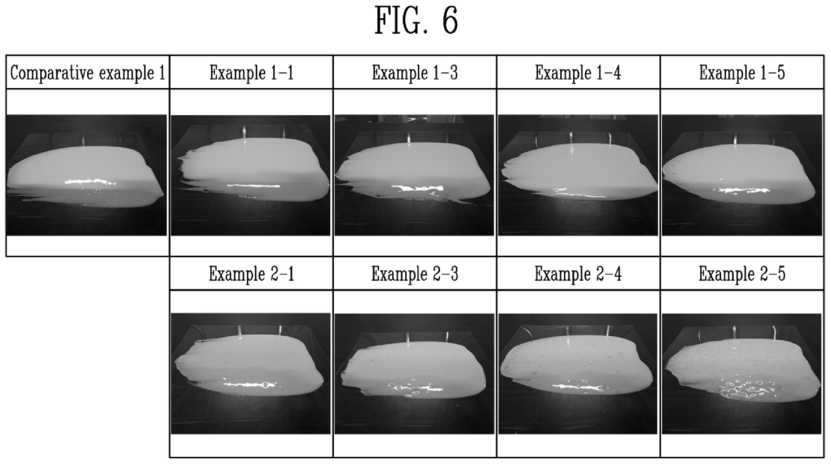

The phase separation characteristics of the primer solutions according to Examples 1 and 2 are determined and are shown in FIG. 6.

As shown in FIG. 6, in the case of Examples 1-5 and 2-5, in which the contents of the antifoaming agent exceed 3.2 wt% based on the total weight of the primer solution, the phase separation phenomenon after coating significantly occur. In other words, as the input content of the antifoaming agent increases, the phase separation phenomenon may intensify due to the insolubility of the antifoaming agent in water as a solvent.

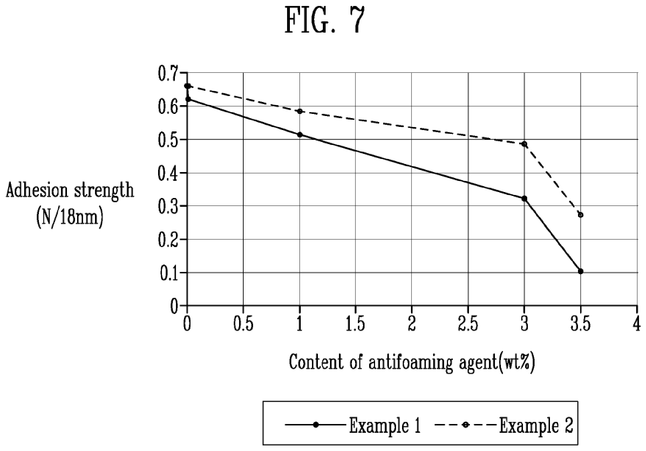

The occurrence of this phase separation phenomenon may affect the adhesion of the primer solution. The adhesion of the primer solutions according to Examples 1 and 2 is checked by using a 90° peel strength meter that peels off the copper foil/aluminum foil substrate and the electrode at a constant rate, and the results are shown in Table 4 and FIG. 7 below.

**[Table 4]**

| | Content of Antifoaming agent (wt%) | Adhesion Strength (N/18nm) |
|---|---|---|
| Comparative example 1 | 0 | 0.661 |
| Example 1-1 | 0.01 | 0.66 |
| Example 1-3 | 1.00 | 0.584 |
| Example 1-4 | 3.00 | 0.485 |
| Example 1-5 | 3.50 | 0.271 |
| Example 2-1 | 0.01 | 0.621 |
| Example 2-3 | 1.00 | 0.512 |
| Example 2-4 | 3.00 | 0.321 |
| Example 2-5 | 3.50 | 0.102 |

Referring to Table 4 and FIG. 7, it may be seen that the adhesion strength of the primer solution decreases as the content of the antifoaming agent increases. In particular, in the case of Examples 1-5 and 2-5, in which the content of the antifoaming agent exceeds 3.2 wt% based on the total weight of the primer solution, the adhesion strength of the primer solution decreases dramatically.

The above described are merely examples of the application of the principles of the present disclosure, and other compositions may be included without departing from the scope of the present disclosure.

## Claims

1. A primer solution for manufacturing an electrode, the primer solution comprising a binder and an antifoaming agent,
wherein a content of the antifoaming agent is 0.00001 wt% to 3.2 wt% based on a total weight of the primer solution for manufacturing an electrode.

2. The primer solution of claim 1, wherein the content of the antifoaming agent is 0.0005 wt% to 3.0 wt% based on the total weight of the primer solution for manufacturing an electrode.

3. The primer solution of claim 1, wherein the binder comprises at least one selected from the group consisting of an aqueous binder or a non-aqueous binder.

4. The primer solution of claim 1, wherein the binder comprises at least one selected from the group consisting of Styrene-butadiene rubber (SBR)-based binders, carboxymethyl cellulose (CMC), polyacrylic acid-based binders, poly(3,4-ethylenedioxythiophene) (PEDOT)-based binders, polyvinylidenefluoride (PVDF), Poly(vinylidene fluoride-co-hexafluoropropylene), polyacrylonitrile, polymethylmethacrylate, acrylonitrile butadiene rubber (NBR), or polybutadiene rubber (BR).

5. The primer solution of claim 1, wherein the antifoaming agent comprises at least one selected from the group consisting of a silicone-based antifoaming agent, a metal soap-based antifoaming agent, an amide-based antifoaming agent, a polyether-based antifoaming agent, a polyester-based antifoaming agent, a polyglycol-based antifoaming agent, or an alcohol-based antifoaming agent.

6. The primer solution of claim 1, further comprising a thickener.

7. A method for manufacturing an electrode for a secondary battery, the method comprising applying, to at least one surface of an electrode collector, a first composition comprising a binder and an antifoaming agent and a second composition comprising an electrode active material,
wherein the first composition comprises 0.00001 wt% to 3.2 wt% of the antifoaming agent based on a total weight of the first composition.

8. The method of claim 7, wherein the binder comprises at least one selected from the group consisting of Styrene-butadiene rubber (SBR)-based binders, carboxymethyl cellulose (CMC), polyacrylic acid-based binders, poly(3,4-ethylenedioxythiophene) (PEDOT)-based binders, polyvinylidenefluoride (PVDF), Poly(vinylidene fluoride-co-hexafluoropropylene), polyacrylonitrile, polymethylmethacrylate, acrylonitrile butadiene rubber (NBR), or polybutadiene rubber (BR).

9. The method of claim 7, wherein the antifoaming agent comprises at least one selected from the group consisting of a silicone-based antifoaming agent, a metal soap-based antifoaming agent, an amide-based antifoaming agent, a polyether-based antifoaming agent, a polyester-based antifoaming agent, a polyglycol-based antifoaming agent, or an alcohol-based antifoaming agent.

10. The method of claim 7, wherein the second composition is applied to the first composition applied to the electrode collector.

11. The method of claim 7, wherein the electrode active material comprises a lithium metal compound.

12. The method of claim 7, wherein the electrode active material comprises at least one selected from the group consisting of a silicon-based material or a carbon-based material.

13. The method of claim 7, wherein the second composition further comprises a binder.

14. The method of claim 7, further comprising drying the first composition and the second composition applied to at least one surface of the electrode collector.

15. An electrode for a secondary battery, the electrode comprising:
an electrode collector; and
an electrode composite layer disposed on at least one surface of the electrode collector,
wherein the electrode composite layer comprises 0.00001 wt% to 10 wt% of an antifoaming agent based on a total weight of the electrode composite layer in a first region that is defined as a region within 10 µm thickness from one surface of the electrode collector.

16. The electrode of claim 15, wherein the first region further comprises a binder.

17. The electrode of claim 16, wherein the electrode composite layer is defined as a region on the first region and comprises a second region comprising an electrode active material.

18. The electrode of claim 15, wherein the first region comprises 0.00001 wt% to 5 wt% of the antifoaming agent based on the total weight of the electrode composite layer.

19. The electrode of claim 16, wherein the first region comprises the binder and the antifoaming agent,
wherein the first region is prepared from a primer solution comprising 0.00001 wt% to 3.2 wt% of the antifoaming agent based on a total weight of the primer solution.
